# EUROPEAN PATENT APPLICATION

(11) **EP 2 509 306 A1**
(43) Date of publication of application: **10.10.2012**
(21) Application number: 10834326.0
(22) Date of filing: 30.03.2010
(51) Int. Cl.: H04N 7/01, G09G 3/20

(54) **IMAGE PROCESSING DEVICE AND IMAGE PROCESSING METHOD**

(30) Priority: 01.12.2009 JP 2009274011
(71) Applicant: Panasonic Corporation, Kadoma-shi Osaka 571-8501 (JP)
(72) Inventor: DOKOU, Sumihiro, Osaka-shi, Osaka 540-6207 (JP)
(74) Representative: Kügele, Bernhard
(86) International application number: PCT/JP2010/002313
(87) International publication number: WO 2011/067869

(57) **Abstract**

To provide an image processing device with simple configuration capable of achieving error reduction and smoothness in an interpolated picture after frame rate conversion.

An image processing device (10) generating an interpolated picture between two temporally former and latter original pictures included in an inputted moving picture to convert a frame rate of the moving picture includes: a motion vector detection unit (11) configured to detect a motion vector quantity between the original pictures for each of blocks obtained by dividing the original picture; a compensation strength determination unit (13) configured to determine, for each predetermined region composed of the blocks a motion compensation strength indicating a degree of matching between the original picture and the interpolated picture based on the detected motion vector quantities; and an interpolated picture generation unit (14) configured to generate, for each predetermined region, the interpolated picture in accordance with the determined motion compensation strength.

## Description

### [Technical Field]

The present invention relates to an image processing device and an image processing method performing frame rate conversion by which a frame rate of a moving picture is converted.

### [Background Art]

Conventionally, with a display device displaying a moving picture of 120 Hz, a moving picture of 60 Hz cannot be displayed automatically, and thus frame rate conversion processing of converting from the moving picture of 60 Hz into a moving picture of 120 Hz is performed. This frame rate conversion processing is processing of creating an interpolated picture in the middle between two frame pictures in the moving picture of 60 Hz. More specifically, this frame rate conversion processing calculates a motion vector with a given block size from the two frames in the moving picture of 60 Hz, and creates a middle frame between the two frames by using this motion vector.

However, in a case where a plurality of objects move in mutually different directions on a screen, failure in the generated interpolated picture may result in some cases.

This failure in the interpolated picture arises as a result of several errors in motion vector detection, such as the error in detecting the motion vector around a border of an object and the error in detecting the motion vector of an object moving at a high speed. Thus, suggested as a method of suppressing this error in the interpolated picture is a method of, upon error occurrence, creating not a proper interpolated picture logically determined in frame rate conversion processing but an interpolated picture close to an original picture (for example, see Patent Document 1).

### [Citation List]

### [Patent Literature]

[PTL 1] International Publication No. 2008-102826

### [Summary of Invention]

### [Technical Problem]

However, the conventional method of suppressing the error in the interpolated picture collectively changes an interpolation phase of an entire screen to a proper phase, thus raising a problem that a trouble occurs at some positions of the screen.

Specifically, in interpolation phase control by motion compensation processing using a motion vector, uniformly controlling the interpolation phase on the screen results in variation in optimum value of the interpolation phase among different positions of the screen. Thus, smoothness is lost due to error reduction of the interpolated picture, causing a section where a sense of judder (unnaturalness in motion) is intensified.

Thus, in view of such a problem, the present invention has been made, and it is an object of the invention to provide an image processing device and an image processing method with simple configuration capable of achieving both error reduction and smoothness in an interpolated picture after frame rate conversion.

### [Solution to Problem]

To achieve the object described above, according to the invention, an image processing device generating an interpolated picture between temporally former and latter original pictures included in an inputted moving picture to convert a frame rate of the moving picture includes: a motion vector detection unit configured to detect a motion vector quantity between the two original pictures for each of a plurality of blocks obtained by dividing the original picture; a compensation strength determination unit configured to determine, for each predetermined region composed of the blocks, a motion compensation strength indicating a degree of matching between the original picture and the interpolated picture based on the detected motion vector quantities; and an interpolated picture generation unit configured to generate, for each predetermined region, the interpolated picture in accordance with the determined motion compensation strength.

Consequently, determining the motion compensation strength based on the motion vector quantity for each predetermined region permits adaptively generating the interpolated picture. Specifically, for example, in a case where there is a person running in a direction opposite to a horizontal direction in which a background moves, if the interpolated picture is focused on error reduction, it is effective for reducing an error in the surroundings of the person, but loses smoothness of the background. Thus, adaptively generating the interpolated picture in accordance with characteristics of the moving picture permits both error reduction and smoothness in an interpolated picture after frame rate conversion to be achieved with simple configuration.

Preferably, further provided is a histogram creation unit configured to create, for each predetermined region, a histogram of the detected motion vector quantities, and the compensation strength determination unit is configured to determine, for each predetermined region, the motion compensation strength by using the created histogram.

Consequently, for each predetermined region, creating the histogram of motion vector quantities and determining the motion compensation strength by using the histogram permits adaptively generating the interpolated picture. Thus, adaptively generating the interpolated picture in accordance with the characteristics of the moving picture permits the both error reduction and the smoothness in the interpolated picture after the frame rate conversion to achieved with the simple configuration.

Preferably, the compensation strength determination unit is configured to determine, for each predetermined region, the motion compensation strength in a manner such that the degree of matching between the original picture and the interpolated picture increases with an increase in a width of the motion vector quantity distribution shown in the histogram.

The compensation strength determination unit may be configured to determine, for each predetermined region, the motion compensation strength in a manner such that the degree of matching between the original picture and the interpolated picture increases with an increase in a peak interval in the motion vector quantity distribution shown in the histogram.

The compensation strength determination unit may be configured to determine, for each predetermined region, the motion compensation strength in a manner such that the degree of matching between the original picture and the interpolated picture increases with an increase in a difference between maximum and minimum values of the motion vector quantities shown in the histogram.

Consequently, the motion compensation strength can easily be determined. Thus, adaptively generating the interpolated picture in accordance with the characteristics of the moving picture permits both the error reduction and the smoothness in the interpolated picture after the frame rate conversion to be achieved with the simple configuration.

Preferably, when the predetermined region is defined as a line region composed of the blocks successive in a line direction horizontal to the picture, the histogram creation unit is configured to create the histogram for each line region, the compensation strength determination unit is configured to determine the motion compensation strength for each line region, and the interpolated picture generation unit is configured to generate the interpolated picture for each line region.

When the predetermined region is defined as a column region composed of the blocks successive in a column direction vertical to the picture, the histogram creation unit may be configured to create the histogram for each column region, the compensation strength determination unit may be configured to determine the motion compensation strength for each column region, and the interpolated picture generation unit may be configured to generate the interpolated picture for each column region.

Consequently, for each region composed of the blocks successive in the line direction or the column direction, the interpolated picture is generated. Thus, for example, in a case where a telop flows on the screen in the line direction or the column direction, the interpolated picture can easily be generated for each telop region. Thus, the interpolated picture can be adaptively generated in accordance with the characteristics of the moving picture, and both the error reduction and the smoothness in the interpolated picture after the frame rate conversion can be achieved with the simple configuration.

Preferably, the compensation strength determination unit is configured to determine the motion compensation strength in a manner such that the motion compensation strengths between the adjacent predetermined regions change successively.

Consequently, the motion compensation strength can be determined in a manner such that the successive motion compensation strengths change successively. Thus, the smooth interpolated picture can be generated.

Preferably, the compensation strength determination unit is configured to further obtain a degree of entire scrolling indicating possibility that the moving picture is scrolling on an entire screen, and by changing all the motion compensation strengths in the interpolated picture, which strengths have been determined by using the histogram, in a manner such that with an increase in the degree of entire scrolling, each motion compensation strength approaches closer to a value of a motion compensation strength logically determined based on frame rates before and after frame rate conversion, newly determine the motion compensation strength.

Consequently, the motion compensation strength is newly determined in a manner such that with the increase in the possibility that the moving picture is scrolling on the entire screen, the picture approaches closer the proper interpolated picture logically determined in the frame rate conversion processing. That is, in a case where creation of an interpolated picture close to the original picture is not required, the picture close to the proper interpolated picture is generated. Thus, the interpolated picture can adaptively be generated in accordance with the characteristics of the moving picture, and both the error reduction and the smoothness in the interpolated picture after the frame rate conversion can be achieved with the simple configuration.

Preferably, the compensation strength determination unit is configured to further obtain, for each predetermined region, a degree of region scrolling indicating possibility that the moving picture is scrolling, and for each predetermined region, by changing the determined motion compensation strength in a manner such that with an increase in the degree of region scrolling, the motion compensation strength approaches closer to the value of the motion compensation strength logically determined based on the frame rates before and after the frame rate conversion, newly determine the motion compensation strength.

Consequently, the motion compensation strength is newly determined in a manner such that with the increase in the possibility that the moving picture is scrolling in the predetermined region, the picture approaches closer to the proper interpolated picture in the predetermined region. That is, in a case where creation of the interpolated picture close to the original picture in the predetermined region is not required, the picture close to the proper interpolated picture is generated. Thus, the interpolated picture can be adaptively generated in accordance with the characteristics of the moving picture, and both the error reduction and the smoothness in the interpolated picture after the frame rate conversion can be achieved with the simple configuration.

Preferably, the compensation strength determination unit is configured to further obtain a degree of motion of a telop indicating possibility that the telop is displayed in a moving manner on the moving picture, and for each predetermined region, by changing the determined motion compensation strength in a manner such that with an increase in the degree of motion of a telop, the motion compensation strength approaches closer to the value of the motion compensation strength logically determined based on the frame rates before and after the frame rate conversion, newly determine the motion compensation strength.

Consequently, the motion compensation strength is newly determined in a manner such that with the increase in the possibility that the telop flows on the moving picture in the predetermined region, the picture approaches closer to the proper interpolated picture in the predetermined region. That is, in a case where the creation of the interpolated picture closer to the original picture in the predetermined region is not required, the picture close to the proper interpolated picture is generated. Thus, the interpolated picture can adaptively be generated in accordance with the characteristics of the moving picture, and both the error reduction and the smoothness in the interpolated picture after the frame rate conversion can be achieved with the simple configuration.

The invention can be realized not only as such an image processing device but also as an image processing method having steps of characteristic processing included in the image processing device or as a program having a computer execute such characteristic steps. It is needless to say that such a program can be put into the market through a recording medium such as a CD-ROM and a transfer medium such as the Internet.

The invention can be further realized as a semiconductor integrated circuit (LSI) that realizes part or all of functions of such an image processing device or as an image processing device such as a digital TV provided with such an image processing device.

### [Advantageous Effects of Invention]

With the image processing device according to the invention, both error reduction and smoothness in an interpolated picture after frame rate conversion can be achieved with simple configuration.

### [Brief Description of Drawings]

[FIG. 1] FIG. 1 is a block diagram showing functional configuration of an image processing device according to Embodiment 1 of the present invention;
[Fig. 2] Fig. 2 is a flow chart showing one example of operation of the image processing device according to Embodiment 1.
[Fig. 3] Fig. 3 is a diagram schematically showing processing of generating an interpolated picture by the image processing device according to Embodiment 1.
[Fig. 4A] Fig. 4A is a diagram illustrating a method of determining a motion compensation strength by using a spread of motion vector quantity distribution according to Embodiment 1.
[Fig,4B] Fig. 4B is a diagram illustrating the method of determining the motion compensation strength by using a spread of motion vector quantity distribution according to Embodiment 1.
[Fig. 5] Fig. 5 is a diagram showing a relationship between a width DW of the motion vector quantity distribution shown in the histogram and the motion compensation strength according to Embodiment 1.
[Fig. 6] Fig. 6 is a diagram illustrating one example of filtering processing performed by a compensation strength determination unit according to Embodiment 1.
[Fig. 7] Fig. 7 is a diagram schematically showing processing of generating an interpolated picture in a case where a moving picture is subjected to frame rate conversion from 24 Hz to 120 Hz according to Embodiment 1.
[Fig.8A] Fig. 8A is a diagram illustrating a method of determining a motion compensation strength by using the number of mountains in motion vector quantity distribution according to Embodiment 2.
[Fig.8B] Fig. 8B is a diagram illustrating the method of determining the motion compensation strength by using the number of mountains in the motion vector quantity distribution according to Embodiment 2.
[Fig.9] Fig. 9 is a diagram showing a relationship between a mountain interval L in the motion vector quantity distribution shown in the histogram and the motion compensation strength according to Embodiment 2.
[Fig. 10A] Fig. 10A is a diagram illustrating a method of determining a motion compensation strength by using a difference between maximum and minimum values of motion vector quantities according to Embodiment 3.
[Fig. 10B] Fig. 10B is a diagram illustrating the method of determining the motion compensation strength by using the difference between the maximum and minimum values of motion vector quantities according to Embodiment 3.
[Fig. 11] Fig. 11 is a diagram showing a relationship between a difference M between the maximum and minimum values of motion vector quantities shown in a histogram according to Embodiment 3.
[Fig. 12] Fig. 12 is a flow chart showing one example of operation of an image processing device according to Embodiment 4.
[Fig. 13A] Fig. 13A is a diagram illustrating processing of newly determining a motion compensation strength by a compensation strength determination unit according to Embodiment 4.
[Fig. 13B] Fig. 13B s a diagram illustrating the processing of newly determining the motion compensation strength by the compensation strength determination unit according to Embodiment 4.

### [Description of Embodiments]

Hereinafter, embodiments of an image processing device according to the present invention will be described with reference to the accompanying drawings.

All numbers indicated below are just illustrative for detailed description of the invention, and thus the invention is not limited to the illustrated numbers.

Embodiments below are configured with hardware and software, but the configuration with the hardware may also be configured with software and the configuration with the software may also be configured with hardware.

### [Embodiment 1]

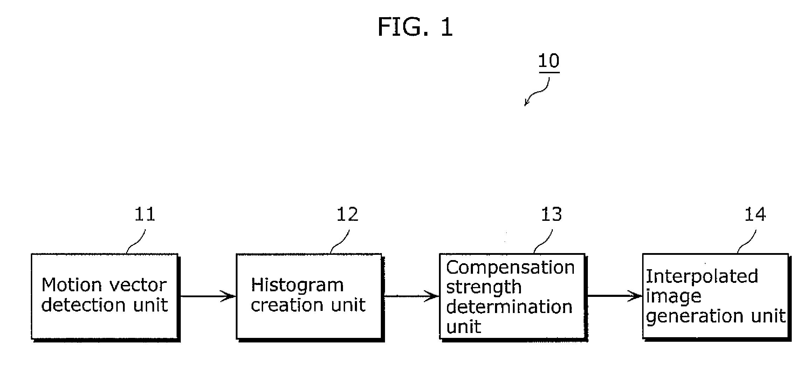

Hereinafter, one embodiment of the invention will be described, referring to FIG. 1.

FIG. 1 is a block diagram showing functional configuration of an image processing device 10 according to Embodiment 1.

The image processing device 10 is a device that generates an interpolated picture between two temporally former and latter original pictures included in an inputted moving picture to convert a frame rate of the moving picture. As shown in this figure, the image processing device 10 includes: a motion vector detection unit 11, a histogram creation unit 12, a compensation strength determination unit 13, and an interpolated picture generation unit 14.

The motion vector detection unit 11 detects a motion vector between the two temporary former and latter original pictures included in the inputted moving picture for each of a plurality of blocks obtained by dividing the original picture. This block is, for example, a macroblock.

Then the motion vector detection unit 11 detects a motion vector quantity of this motion vector. Here, the motion vector quantity is a value indicating magnitude and a direction of the motion vector. That is, a difference in the magnitude of the motion vector results in a difference in the value of motion vector quantity, and a difference in the direction of the motion vector results in a difference in the value of motion vector quantity.

The histogram creation unit 12 creates, for a predetermined region composed of a plurality of blocks, a histogram of the motion vector quantities detected by the motion vector detection unit 11.

The compensation strength determination unit 13 detects, for each determined region, a motion compensation strength indicating a degree of matching between the inputted original picture and the interpolated picture based on the motion vector quantities detected by the motion vector detection unit 11. Specifically, the compensation strength determination unit 13 determines the motion compensation strength by using the histogram created by the histogram creation unit 12.

The interpolated picture generation unit 14 generates, for each predetermined region, an interpolated picture in accordance with the motion compensation strength determined by the compensation strength determination unit 13. More specifically, the interpolated picture generation unit 14 generates the interpolated picture for each predetermined region by performing motion compensation processing on at least one of the two original pictures by using the motion vector between the two original pictures detected by the motion vector detection unit 11 and the degree of matching between the original picture and the interpolated picture indicated by the motion compensation strength determined by the compensation strength determination unit 13.

Next, processing of generating the interpolated picture by the image processing device 10 will be described.

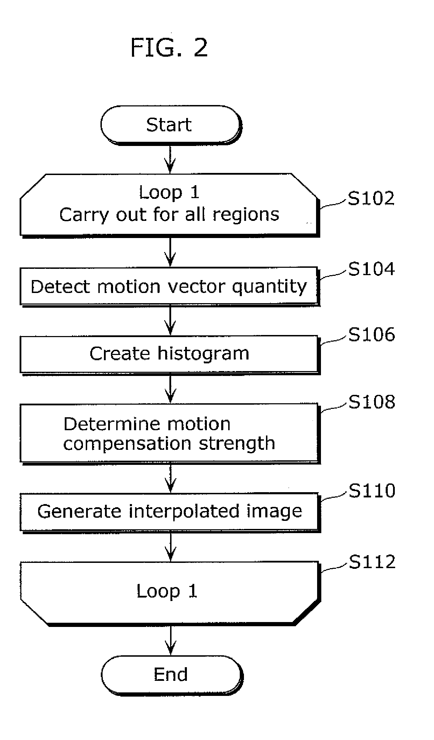

FIG. 2 is a flow chart showing one example of operation of the image processing device 10 according to Embodiment 1.

As shown in this figure, for each predetermined region, the following processing (S104 to S110) is repeated for all the regions in the picture (loop 1: S102 to S112).

First, the motion vector detection unit 11 detects a motion vector for each block and detects a motion vector quantity of this motion vector (S104).

The motion vector here indicates a state of picture motion, and as a method of detecting this motion vector, a block matching method is provided.

The block matching method divides a target picture into a plurality of blocks, and individually evaluates degrees of correlation between a focused block at which a motion is to be detected and a plurality of candidate regions (hereinafter called candidate blocks) within a predetermined search range in a frame before or after the target picture. Then the most highly correlated candidate block among these candidate blocks is determined, and displacement between this candidate block and the focused block is defined as the motion vector.

The search range described above may be set at any desired range over at least one of the former frames and the latter frame including the focused block.

A correlation value may be any value that indicates a smaller value with an increase in a degree of approximation between the focused block and the candidate block, such as a sum of absolute difference values between corresponding pixels between these blocks or a sum of square difference values between the corresponding pixels between these blocks

The histogram creation unit 12, for each predetermined region, creates a histogram of the motion vector quantities detected by the motion vector detection unit 11 (S106).

Next, the compensation strength determination unit 13 determines, for each predetermined region, a motion compensation strength by using the histogram created by the histogram creation unit 12 (S108).

Then the interpolated picture generation unit 14 generates, for each predetermined region, an interpolated picture in accordance with the motion compensation strength determined by the compensation strength determination unit 13 (S110).

As a result of the above, the process of generating the interpolated picture by the image processor 10 ends.

Next, processing of, for each predetermined region, creating the histogram by the histogram creation unit 12, determining the motion compensation strength by the compensation strength determination unit 13, and generating the interpolated picture by the interpolated picture generation unit 14 (S106 to S110 in FIG. 2) will be described in detail.

First, the processing of generating the interpolated picture by the image processing device 10 will be described.

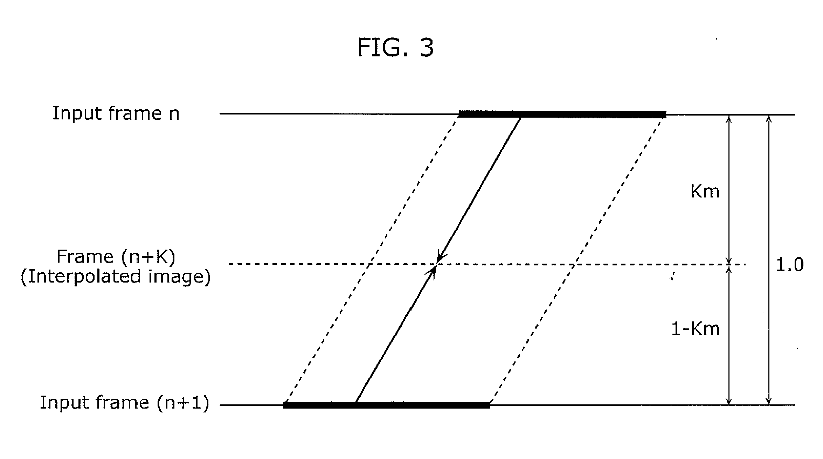

FIG. 3 is a diagram schematically showing the process of generating the interpolated picture by the image processing device 10 according to Embodiment 1. More specifically, this figure is a diagram schematically showing projection processing of generating the interpolated picture as picture data of an intermediate frame from picture data of an input frame n or picture data of an input frame (n+1).

This figure shows a phase relationship where a frame phase difference between the input frame n and the input frame (n+1) is 1.0, corresponding to a case where an inter-frame distance of the motion vector detected by the motion vector detection unit 11 is 1.0.

Then to generate picture data of the interpolated picture (n+K) from the picture data of the input frame n through the projection processing, gain processing of multiplying the motion vector by an interpolation phase coefficient Km is performed.

In a case where the interpolation picture (n+K) is generated from the picture data of the input frame (n+1) through the projection processing, a time direction is opposite to that in the aforementioned case where it is created from the input frame n, and thus gain processing of multiplying the motion vector by -(1-Km) is performed. Note that a phase just in the middle between the input frame n and the input frame (n+1), that is, where Km=0.5, is called a proper phase, which will also be referred in the description below.

In a case where the interpolated picture (n+K) is created where Km=0.4 or 0.3 with respect to the proper phase where Km=0.5, the picture data of the generated interpolated picture (n+K) has a more intense component of the input frame n. Based on the reason that the input frame n is the original picture before the generation of the picture data of the interpolated picture (n+K), this interpolation phase where Km=0.4 or 0.3 is called a phase close to the original picture, which will also be referred in the description below.

Where Km=0.6 or 0.7, the generated picture data of the interpolated picture (n+K) has an intense component of the input frame (n+1), which similarly means that the generated picture approaches closer to the original picture.

Setting, for picture breakdown of the interpolated picture (n+K), the interpolation phase closer to the original picture than the proper phase where Km=0.5 more intensifies the component of the original picture, and thus this is effective as a means for error reduction in the interpolated picture (n+K).

However, uniformly determining a correction value of the interpolation phase for the entire screen results in trouble.

As a means for solving this, for each predetermined region, creating a histogram by the histogram creation unit 12, changing an interpolation phase in accordance with a result of the histogram created by the histogram creation unit 12 to determine a motion compensation strength by the compensation strength determination unit 13, and generating an interpolated picture by the interpolated picture generation unit 14 will be described below.

Based on the histogram created by the histogram creation unit 12, the motion compensation strength is determined, but in Embodiment 1, as a method of this determination, a method of determining the motion compensation strength by using a spread of motion vector quantity distribution will be described.

Considering different cases of motion vector quantity distribution of a moving picture, for example, in the case where an entire screen scrolls in a single direction such as a horizontal or vertical direction, the motion vector quantity distribution of in this case has vectors in the same direction on the entire screen, and thus all the quantities are equal in value, thus obtaining a result such that the distribution is focused on this value.

On the contrary, in the case where an object is moving in a direction opposite to that of the background, the distribution appears with a value indicating a motion of the background and a value indicating a motion of the object. In this case, the distribution focuses on the two ranges, with a certain value indicating the motion of the background and the other value indicating the motion of the object.

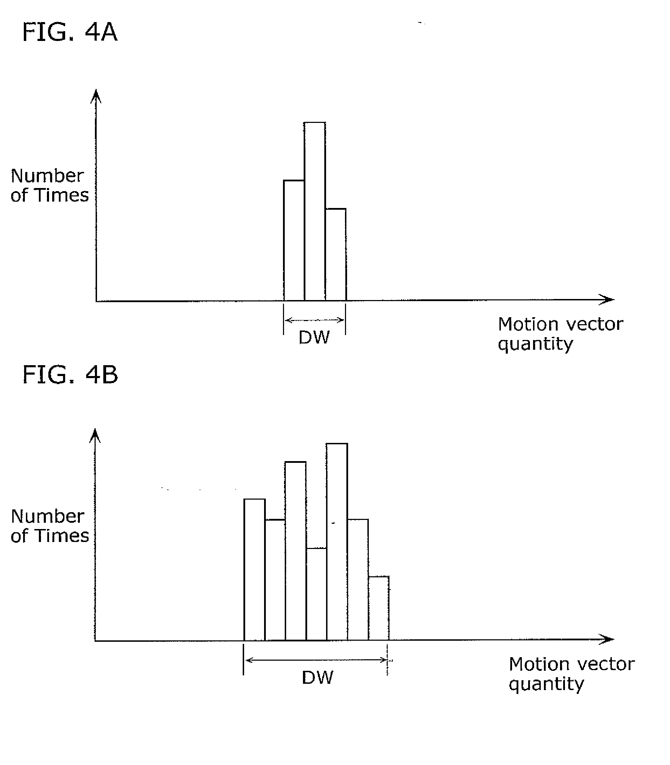

FIGS. 4A and 4B are diagrams illustrating the method of determining the motion compensation strength by using the spread of motion vector quantity distribution according to Embodiment 1.

More specifically, FIG. 4A is a diagram illustrating one example of a histogram showing the spread of motion vector quantity distribution in a case of motion in a single direction. FIG. 4B is a diagram illustrating one example of a histogram showing the spread of motion vector quantity distribution in a case where objects move in different directions or they move in the same direction but at different moving speeds.

As shown in these figures, the histogram creation unit 12 creates a histogram of motion vector quantities.

Here, these figures show the spreads of motion vector quantity distribution where a horizontal axis is a motion vector quantity indicating the magnitude of a motion vector and a vertical axis is the number of times indicating frequency in which this motion vector quantity appears.

Then how large or small a width DW of the motion vector quantity distribution shown in these figures serves as a rough standard for error occurrence at time of the interpolated picture creation.

Specifically, at a border between the regions having different directions of motion vectors, the motion vector detection unit 11 cannot detect the motion vector completely, and consequently detect a motion vector in a direction different from the actual motion quantity, which contribute to an error.

Therefore, it is obvious that compared to a case where a difference between the adjacent motion vectors sandwiching this border is small, error occurrence probability is even larger in a case where this difference is large. There is possibility that with a large width DW of the motion vector quantity distribution, a difference in motion vector at this border is large.

As described above, in a case where there are different motion vectors adjacently to each other, it is effective to control an interpolation phase in accordance with this difference, and with an increase in this difference, setting the interpolation phase at a value closer to the original picture permits error reduction.

Specifically, in a case of a histogram as shown in FIG. 4A, the compensation strength determination unit 13 determines the motion compensation strength in a manner such that the interpolation phase becomes equal to the proper phase, and the interpolated picture generation unit 14 generates an interpolated picture in accordance with this motion compensation strength.

In a case of a histogram having wide distribution as shown in FIG. 4B, the compensation strength determination unit 13 determines the motion compensation strength in a manner such that the interpolation phase approaches closer to the original picture, and the interpolated picture generation unit 14 generates an interpolated picture in accordance with this motion compensation strength. This makes it possible to lower the error occurrence probability.

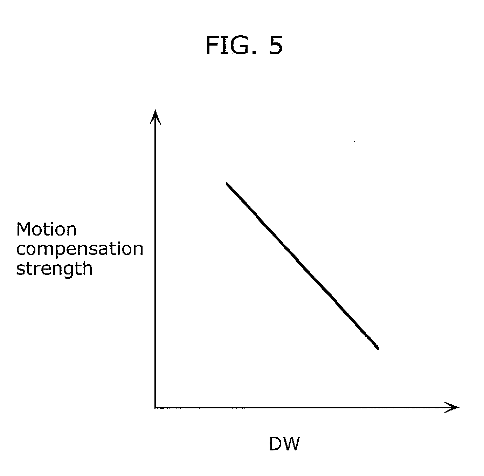

FIG. 5 is a diagram showing a relationship between the width DW of the motion vector quantity distribution shown in the histogram and the motion compensation strength according to Embodiment 1.

As shown in this figure, the compensation strength determination unit 13 determines, for each predetermined region, the motion compensation strength in a manner such that the degree of matching between the original picture and the interpolated picture increases with an increase in the width DW of the motion vector quantity distribution shown in the histogram.

More specifically, the compensation strength determination unit 13 determines the motion compensation strength in a manner such that the motion compensation strength decreases with an increase in the width DW of the distribution, thereby bringing the interpolated picture closer to the original picture. That is, for example, when the motion compensation strength is the interpolation phase coefficient Km (where Km is a numerical value equal to or smaller than 0.5) shown in FIG. 3, the degree of matching between the original picture and the interpolated picture increases with a decrease in the value of Km. Thus, the compensation strength determination unit 13 determines the motion compensation strength in a manner such that the motion compensation strength decreases with an increase in the width DW of the distribution.

Then the interpolated picture generation unit 14 performs gain processing of multiplying the motion vector by the motion compensation strength (interpolation phase coefficient Km) to generate an interpolated picture.

When the motion compensation strength is, for example, the interpolation phase coefficient Km (where Km is a numerical value equal to or larger than 0.5), the degree of matching between the original picture and the interpolated picture increases with an increase in the value of Km, and therefore the compensation strength determination unit 13 may determine the motion compensation strength in a manner such that the motion compensation strength increases with an increase in the width DW of the distribution.

This interpolation phase control method is also effective for a region provided with a telop. For example, in a case where the telop is provided horizontally to the screen, creating an interpolated picture with the proper phase for the entire screen permits a smooth motion in the telop region as a result of the interpolated picture creation, but for a picture where objects with different motions pass each other as described above in a non-telop region, obviously results in error occurrence.

At this point, the error occurrence can be reduced by changing the interpolation phase for each region. That is, for the non-telop region, the interpolation phase is determined in accordance with characteristics of the picture, and for a region judged to be a telop region, a picture is created with the proper phase. This makes it possible to reduce a problem that scrolling characters are distorted and thus hardly viewed in a case where the interpolation phase is processed for the entire screen.

As described above, compared to a case where the interpolation phase is changed on an individual screen basis, that is, an individual frame basis, controlling the interpolation phase for each region permits creation of picture data in accordance with each region of the screen, which obviously improves picture quality.

For the scrolling, a description has already been provided above, but it is needless to say that for a picture where only part of the screen scrolls, the picture quality similarly improves.

Providing a repeated description, there is no problem with the picture entirely scrolling, but for example, assume a case where an upper half of a screen scrolls and a lower half of the screen makes a different motion. In this case, for the upper half scrolling region, setting the proper phase smoothens the motion, but for the lower half, unlike the scrolling, in a case where objects move in a plurality of directions and the proper phase is set similarly to the case of the upper half results in high possibility of error occurrence.

Therefore, in this case, the interpolation phase may be set in accordance with characteristics of the histogram created based on the motion vectors as described above.

As described above, the method of determining the interpolation phase for each of the regions instead of determining the interpolation phase for the entire screen is also effective for a picture whose screen partially scrolls.

The above description is given without any specification given to the predetermined region creating the histogram, but it is particularly effective to create a histogram on an individual line basis.

More specifically, when the predetermined region is defined as a line region composed of a plurality of blocks successive in a line direction horizontal to a picture, the histogram creation unit 12 creates a histogram for each line region. Then the compensation strength determination unit 13 determines a motion compensation strength for each line region, and the interpolated picture generation unit 14 creates an interpolated picture for each line region.

Creating this histogram on an individual line basis and setting the interpolation phase for each line as described above permits easy configuration of a processing circuit. For example, for a telop flowing horizontally, a line over which the telop flows can be detected with accuracy. As described above, compared to a case where the histogram is created for the entire screen, interpolation phase control in accordance with individual motions can be performed, which permits effective interpolation phase control without unnaturalness.

Carrying this out not on an individual horizontal line basis but on an individual vertical column basis is also effective for some pictures. Examples of this include a case where a telop flows in the vertical direction.

More specifically, when the predetermined region is defined as a column region includes composed of a plurality of blocks successive in a column direction vertical to a picture, the histogram creation unit 12 creates a histogram for each column region. Then the compensation strength determination unit 13 may determine a motion compensation strength for each column region, and the interpolated picture generation unit 14 may create an interpolation phase for each column region.

The telop has a fixed motion quantity in many cases, and thus for a telop flowing in the horizontal direction or the vertical direction, creating a histogram for the line direction or the column direction makes it easy to discriminate between a telop portion and a non-telop portion. Thus, creating a picture by setting the proper phase at the line or column judged to be a telop can provide a smooth motion at the telop portion.

As described above, creating a histogram on an individual line basis or an individual column basis, controlling an interpolation phase based on this, and determining a motion compensation strength makes it possible to create an interpolated picture in accordance with characteristics of a moving picture.

In a case where a histogram is created in the line direction and the interpolation phase is controlled based on its distribution, when the interpolation phase largely differs from that of a line above or below the line concerned, a view with a step difference is provided with high possibility.

Thus, in order to avoid a large difference in interpolation phase between the adjacent lines, it is effective to perform filtering so as to set a smooth change in the interpolation phase in the line direction. The same applies to the column direction.

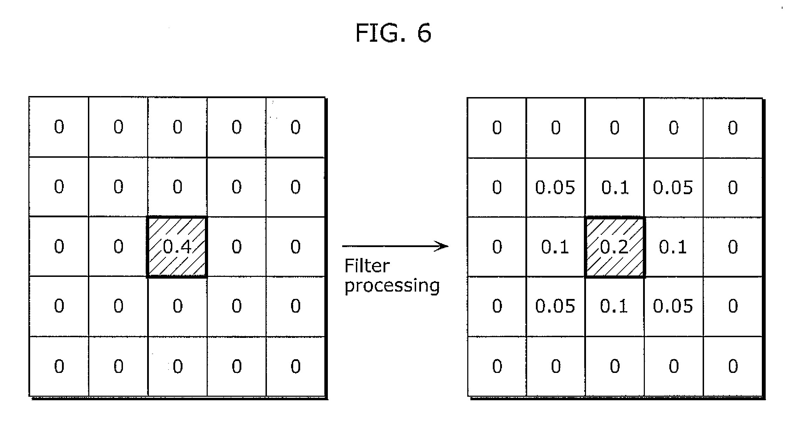

FIG. 6 is a diagram illustrating one example of filtering processing performed by the compensation strength determination unit 13 according to Embodiment 1.

The compensation strength determination unit 13 determines the motion compensation strength in a manner such that a motion compensation strength between the adjacent predetermined regions changes successively.

More specifically, as shown in this figure, where a motion compensation strength at a central region is, for example, "0.4" and motion compensation strengths at adjacent regions on upper, lower, right, and left sides of the region are "0", the compensation strength determination unit 13 performs the filtering processing to change the motion compensation strength at the central region to "0.2" and also change the motion compensation strengths at the adjacent regions on the upper, lower, right, and left sides of the region to "0.1".

As described above, the compensation strength determination unit 13 changes the determined motion compensation strength so that the motion compensation strength changes successively.

The description given above refers to the display device converting a moving picture of 60 Hz to display a moving picture of 120 Hz, and the same applies to a display device converting a moving picture of 24 Hz to display a moving picture of 120 Hz. To convert the moving picture of 24 Hz to display the moving picture of 120 Hz on the display device, four interpolated pictures are newly generated from two frames.

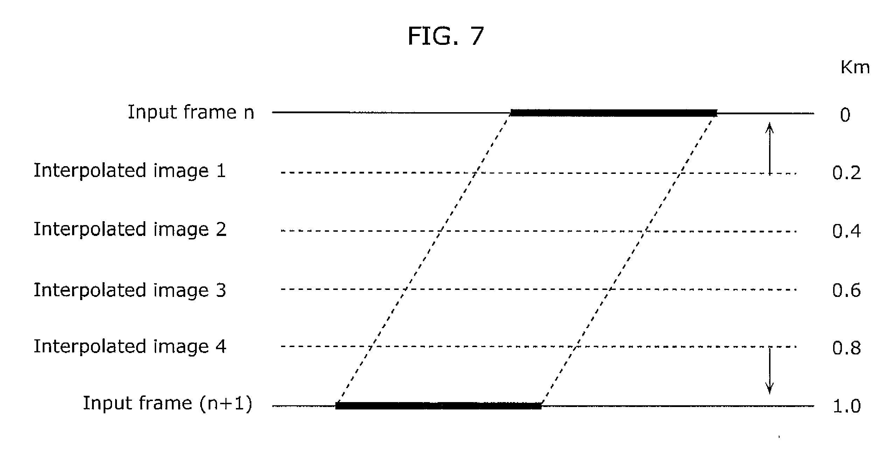

FIG. 7 is a diagram schematically showing processing of generating interpolated pictures upon subjecting a moving picture to frame rate conversion from 24 Hz to 120 Hz.

As shown in this figure, the proper phases of the interpolated picture, in terms of positions of interpolation phase, correspond to four positions where interpolation phase coefficients Km=0.2, 0.4, 0.6 and 0.8. That is, four frames for interpolated pictures 1 to 4 are generated between the input frame n and the input frame (n+1).

Here, for the interpolated picture 1 where the proper phase is Km=0.2, the degree of matching between the original picture of the input frame n and the interpolated picture 1 increases with a decrease in a value of Km, and therefore, the compensation strength determination unit 13 determines a motion compensation strength in a manner such that the value of Km decreases with an increase in the width of the motion vector quantity distribution shown in the histogram.

For the interpolated picture 4 where the proper phase is Km=0.8, the degree of matching between the original picture of the input frame (n+1) and the interpolated picture 4 increases with an increase in the value of Km, and therefore, the compensation strength determination unit 13 determines a motion compensation strength in a manner such that the value of Km increases with an increase in the width of the motion vector quantity distribution shown in the histogram.

Note that a method of determining the motion compensation strength by the compensation strength determination unit 13 is not limited to the one described above, but may be determining a motion compensation strength in a manner such as to bring the interpolated picture 1 closer to the input frame (n+1).

Compared to the case of the moving picture of 60 Hz for which one interpolated picture is created from two frames, for a moving picture of 24 Hz for which the four interpolated pictures are created from the two frames, if reliability of the detected vector is low, picture breakdown and failure caused by an error worsens.

Thus, providing a strong tendency to set a phase closer to the original picture for a cinema moving picture of 24 Hz compared to a moving picture of 60 Hz permits suppression of the picture failure.

As described above, with the image processing device 10 according to Embodiment 1, an interpolated picture can adaptively be generated by for each predetermined region, creating a histogram of motion vector quantities and determining a motion compensation strength by using the histogram. That is, in a case where there is a person running in a direction opposite to a horizontal direction in which the background moves, providing an interpolated picture focused on error reduction is effective for reducing an error around the person but it loses smoothness of the background. Thus, adaptively generating an interpolated picture in accordance with characteristics of a moving picture permits both the error reduction and the smoothness in the interpolated picture after frame rate conversion to be achieved with simple configuration.

For each of the regions composed of the blocks successive in the line direction or the column direction, the interpolated picture is generated. Thus, for example, in a case where a telop flows in the line direction or the column direction on a screen, the interpolated picture can easily be generated for each region of the telop.

The motion compensation strength is determined in a manner such that successive motion compensation strengths change in a successive manner, thus permitting generation of a smooth interpolated picture.

### [Embodiment 2]

In Embodiment 1, the motion compensation strength is determined by using the width of motion vector quantity distribution shown in the histogram. However, in Embodiment 2, focusing on the number of mountains in distribution of a histogram, an interpolation phase is controlled based on a difference between one mountain and two mountains to determine a motion compensation strength, thereby enhancing effect of suppressing error reduction.

For a moving picture, in a case where the entire screen scrolls, motion vectors have the same value as described above, thus focusing on a specific value, so that the number of mountains in the distribution is one. That is, one mountain appears.

On the contrary, in a case where an object moves in a direction opposite to a direction in which the background moves, a provided histogram has two peaks appearing as a motion vector quantity indicating the motion of the background and a motion vector quantity indicating the motion of the object.

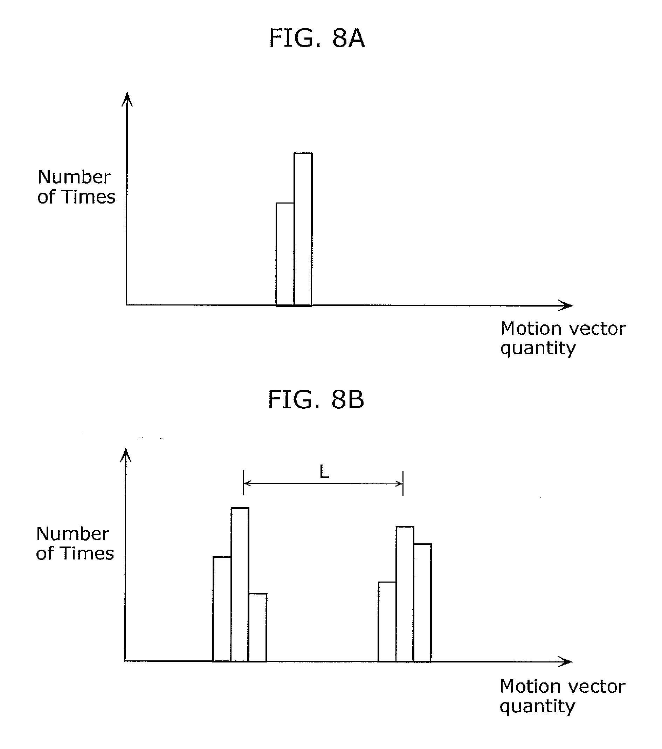

FIGS. 8A and 8B are diagrams illustrating a method of determining a motion compensation strength by using the number of mountains in motion vector quantity distribution according to Embodiment 2.

More specifically, FIG. 8A is a diagram illustrating one example of a histogram showing a motion vector quantity distribution having one mountain. FIG. 8B is a diagram illustrating one example of a histogram showing a motion vector quantity distribution having two mountains.

As shown in these figures, the histogram creation unit 12 creates a histogram of motion vector quantities.

Here, these figures show the number of mountains and a mountain interval in the motion vector quantity distribution where a horizontal axis is magnitude of a motion vector and a vertical axis is the number of times indicating frequency in which the motion vector quantity appears.

Now referring to a difference in motion between the background and the object, two or more mountains are formed in the distribution not only in a case where directions of their movements are opposite to each other but also in a case where even with the same directions, motion quantities differ from each other. In a case where a difference in a moving direction is large, a difference between the peaks of the mountains in the distribution, that is, the mountain interval is large. The interval L shown in FIG. 8B denotes this mountain interval.

The mountain interval is a difference in motion vector quantity between peak positions of the adjacent mountains, and more specifically a difference between the motion vector quantity when the number of times in one of the mountains is maximum and the motion vector quantity when the number of times in the other mountain is maximum.

When there are two peaks in the distribution, this mountain interval is also related to error occurrence, and if the interval is large, the error occurrence probability is also high, and thus the motion compensation strength may be determined with reference to this interval L. That is, the motion compensation strength is determined so that the interpolation phase approaches closer to the original picture with an increase in the interval L.

As described above, when a focus is on the number of mountains in the motion vector quantity distribution of the histogram, based on results of the generated histogram, division can be made into a case where the distribution has one mountain, a case where the distribution has two mountains, a case where the distribution has three mountains, etc. In addition, in the case where the distribution has two mountains, division can be made into a case where a difference between the peak positions of the mountains is large, a case where the difference is small, etc.

More specifically, as shown in FIG. 8A, it is judged based on the distribution of the histogram that the screen scrolls in the same direction in the case where the number of mountains is two. Then in the case of scrolling in the same direction, it is assumed that there is no scene such as a scene where an object and the background pass each other and thus there is no section where an error occurs. Thus, the compensation strength determination unit 13 determines a motion compensation strength in a manner such that the interpolation phase becomes equal to the proper phase, and the interpolated picture generation unit 14 generates an interpolated picture in accordance with this motion compensation strength.

In addition, as shown in FIG. 8B, it is assumed that the background and an object move in different directions in the case where the number of mountains is two, and thus there is a section where the background and the object pass each other. Thus, there is possibility that an error is occurring, and thus to suppress this, the compensation strength determination unit 13 determines a motion compensation strength in a manner such that the interpolation phase becomes a phase closer to the original picture, and the interpolated picture generation unit 14 generates an interpolated picture in accordance with this motion compensation strength.

As a result, even in a case where a section at which the screen scrolls and a section at which the object and the background pass each other are mixed together, the interpolation phase is set at the proper phase for the section at which the scrolling is occurring, and the interpolation phase is set at the phase closer to the original picture for the section at which the object and the background pass each other. As a result, without losing smoothness at the scroll section, an error in the interpolated picture can be reduced. Moreover, even suppressing the error at a portion where the object and the background pass each other does not lose the smoothness at the scrolling portion.

In conventional interpolation phase control on an entire screen, setting a proper phase with a priority put on the smoothness may cause a section resulting in failure caused by an error, and setting an interpolation phase at a phase closer to the original picture with a priority put on the error reduction may lose the smoothness at a scrolling portion. However, controlling the interpolation phase in accordance with characteristics of a screen for each region can ensure both the error reduction and the smoothness, which has been impossible in the interpolation phase control performed for the entire screen.

Specifically, by changing for each region the motion compensation strength as a set value of interpolation phase, it is possible to mix on the screen the region where error occurrence is desired to be suppressed and the region where the smoothness is desired to be ensured.

Next, in a case where there are even three or more moving directions, the following may be done.

Since the number of mountains indicating a collection of motions increases to three or more, the motion cannot be specified, which makes it difficult to make judgment. In this case, in accordance with whether or not an item has a priority on the smoothness or the error reduction, an interpolation phase may be determined. That is, to put a priority on the smoothness, the phase may be set at a value closer to the proper phase, and to put a priority on the error reduction, the interpolation phase may be set at a phase closer to the original picture.

Hereinafter, the processing of determining the motion compensation strength by the compensation strength determination unit 13 will be described in detail.

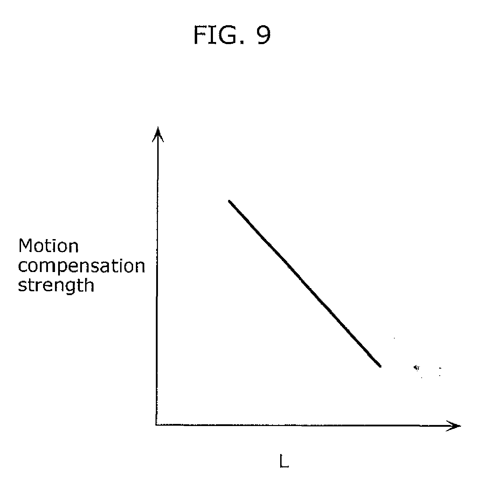

FIG. 9 is a diagram showing a relationship between the mountain interval L of the motion vector quantity distribution shown in the histogram and the motion compensation strength according to Embodiment 2.

When the mountain interval L in the distribution is small, the number of mountains in the distribution is one with high possibility, and when the mountain interval L in the distribution is large, the number of mountains in the distribution is two or more with high possibility. In a case where the number of mountains is one, it is not required to bring the interpolated picture closer to the original picture. In a case where the number of mountains in the distribution is two, the error occurrence probability increases with an increase in the mountain interval L in the distribution, and thus it is required to bring the interpolated picture closer to the original picture.

Thus, as shown in this figure, the compensation strength determination unit 13 determines, for each predetermined region, a motion compensation strength in a manner such that the degree of matching between the original picture and the interpolated picture increases with an increase in the mountain interval L in the motion vector quantity distribution shown in the histogram.

More specifically, the compensation strength determination unit 13 determines the motion compensation strength in a manner such that the motion compensation strength decreases with an increase in the mountain interval L in the distribution, thereby bringing the interpolated picture closer to the original picture. That is, for example, if the motion compensation strength is the interpolation phase coefficient Km (where Km is a numerical value equal to or smaller than 0.5) shown in FIG. 3, the degree of matching between the original picture and the interpolated picture increases with a decrease in the value of Km. Thus, the compensation strength determination unit 13 determines the motion compensation strength in a manner such that the motion compensation strength decreases with an increase in the mountain interval L in the distribution.

Then the interpolated picture generation unit 14 performs gain processing of multiplying the motion vector by the motion compensation strength (interpolation phase coefficient Km) to thereby generate an interpolated picture.

If the motion compensation strength is, for example, the interpolation phase coefficient Km (where Km is a numerical value equal to or larger than 0.5), the degree of matching between the original picture and the interpolated picture increases with an increase in the value of Km, and therefore the compensation strength determination unit 13 may determine the motion compensation strength in a manner such that the motion compensation strength increases with an increase in the mountain interval L in the distribution.

As described above, with the image processing device 10 according to Embodiment 2, in accordance with the number of mountains and the mountain interval in the distribution of the histogram, the motion compensation strength can easily be determined, thus permitting reduction in the error occurrence and creation of a high-quality interpolated picture with smoothness ensured.

### (Embodiment 3)

In Embodiment 1 and 2, the motion compensation strength is determined by using the spread of the motion vector quantity distribution shown in the histogram or the mountain interval in the distribution. However, in Embodiment 3, the motion compensation strength is determined by using a difference between maximum and minimum values of motion vector quantities in the distribution of the histogram.

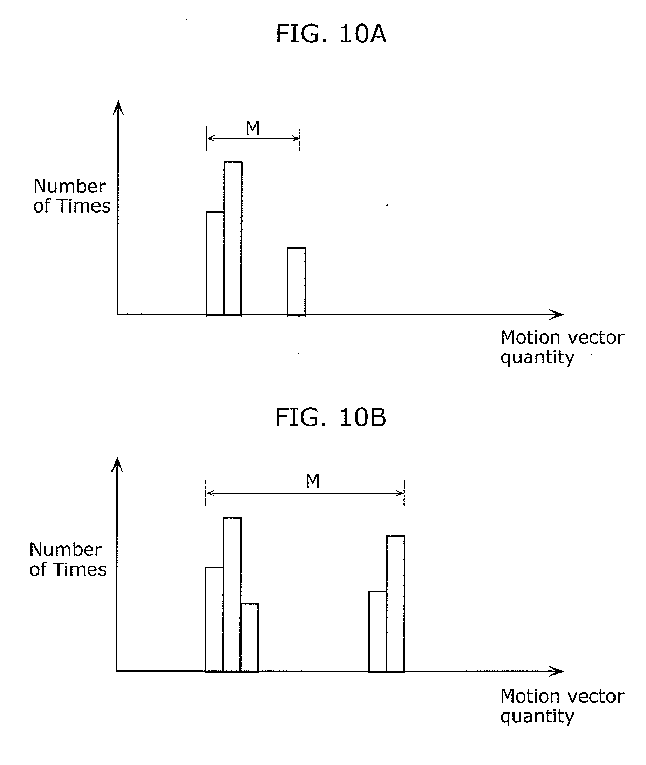

FIGS. 10A and 10B are diagrams illustrating a method of determining the motion compensation strength by using the difference between the maximum and minimum values of motion vector quantities according to Embodiment 3.

More specifically, FIG. 10A is a diagram illustrating one example of a histogram showing motion vector quantity distribution where the difference between the maximum and minimum values is small. FIG. 10B is a diagram illustrating one example of a histogram showing motion vector quantity distribution where the difference between the maximum and minimum values is large.

As shown in these figures, the histogram creation unit 12 creates a histogram of motion vector quantities.

Here, these figures show a difference M between the maximum and minimum values of motion vector quantities where a horizontal axis is a motion vector quantity indicating magnitude of a motion vector and a vertical axis is the number of times indicating frequency in which this motion vector quantity appears.

As in the distribution shown in FIG. 10A, the small difference M between the maximum and minimum values of motion vector quantities means that the motion vector quantities focus on a specific value. That is, it may be judged that a region motion in this case is a single motion such as scrolling, in which case possibility of error occurrence is low.

Thus, the compensation strength determination unit 13 determines a motion compensation strength in a manner such that a value of the interpolation phase becomes close to the proper phase, and the interpolated picture generation unit 14 generates an interpolated picture in accordance with this motion compensation strength. This can ensure the smoothness.

On the contrary, as shown in FIG. 10B, if the difference M between the maximum and minimum values of motion vector quantities is large, the motion vector quantities do not focus on the specific value, but they are at least two different values, in other words, there are objects with different motions.

Therefore, there is possibility that an error is occurring, in which case for the purpose of error reduction, the compensation strength determination unit 13 determines a motion compensation strength in a manner such that the interpolation phase becomes a phase close to the original picture, and the interpolated picture generation unit 14 generates an interpolated picture in accordance with this motion compensation strength.

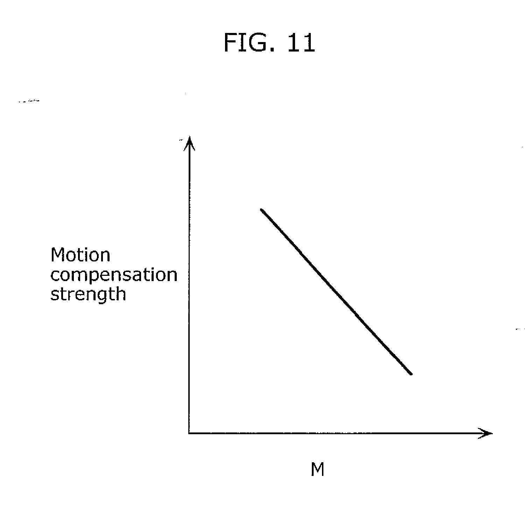

FIG. 11 is a diagram showing a relationship between the difference M between the maximum and minimum values of motion vector quantities shown in the histogram and the motion compensation strength according to Embodiment 3.

As shown in this figure, the compensation strength determination unit 13 determines, for each predetermined region, the motion compensation strength in a manner such that the degree of matching between the original picture and the interpolated picture increases with an increase in the difference between the maximum and minimum values of motion vector quantities shown in the histogram.

More specifically, the compensation strength determination unit 13 determines the motion compensation strength in a manner such that the motion compensation strength decreases with an increase in the difference M between the maximum and minimum values, thereby bringing the interpolated picture closer to the original picture. That is, for example, if the motion compensation strength is the interpolation phase coefficient Km (where Km is a numerical value equal to or smaller than 0.5) shown in FIG. 3, the degree of matching between the original picture and the interpolated picture increases with a decrease in the value of Km. Thus, the compensation strength determination unit 13 determines the motion compensation strength in a manner such that the motion compensation strength decreases with an increase in the difference M between the maximum and minimum values.

Then the interpolated picture generation unit 14 performs gain processing of multiplying the motion vector by the motion compensation strength (interpolation phase coefficient Km) to thereby generate an interpolated picture.

If the motion compensation strength is, for example, the interpolation phase coefficient Km (where Km is a numerical value equal to or larger than 0.5), the degree of matching between the original picture and the interpolated picture increases with an increases in the value of Km, and therefore the compensation strength determination unit 13 may determine the motion compensation strength in a manner such that the motion compensation strength increases with an increase in the difference M between the maximum and minimum values.

As described above, the possibility of error occurrence increases with an increase in the difference between the maximum and minimum values of motion vector quantities, and therefore setting the interpolation phase at a phase closer to the original picture in accordance with an increase in this difference makes it possible to perform frequency control of error occurrence.

With the image processing device 10 according to Embodiment 3, the motion compensation strength can easily be determined by using the difference between the maximum and minimum values of motion vector quantities in the distribution of the histogram. Thus, adaptively generating the interpolated picture in accordance with characteristics of the moving picture permits both the error reduction and the smoothness in the interpolated picture after frame rate conversion to be achieved with simple configuration.

### [Embodiment 4]

In Embodiment 1 to 3, for scrolling or motion of a telop, a histogram of motion vector quantities is created and an interpolation phase is controlled to determine a motion compensation strength. However, in Embodiment 4, by acquiring information indicating a degree of scrolling or motion of a telop, a motion compensation strength in accordance with this degree is determined.

As a result, for a section with simple scrolling or motion of a telop, a motion compensation strength close to the proper phase can be set to thereby keep smooth scrolling or motion of a telop, and for a section where an error has been occurring conventionally, the interpolation phase can be set closely to the original picture to thereby achieve the error reduction.

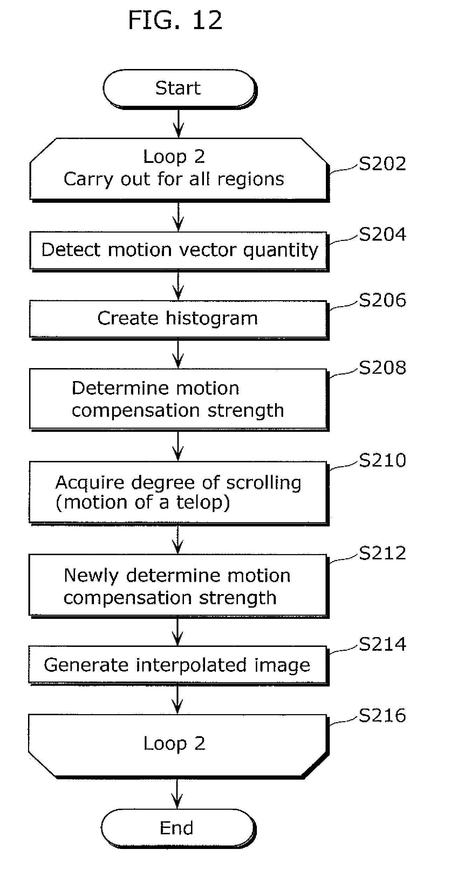

FIG. 12 is a flow chart showing one example of operation of the image processing device 10 according to Embodiment 4.

As shown in this figure, for each predetermined region, the following processing (S204 to S214) is repeated (loop 2: S202 to S216) for all regions in a picture.

First, the motion vector detection unit 11 detects a motion vector quantity for each block (S204), the histogram creation unit 12 creates a histogram of motion vector quantities for each predetermined region (S206), and the compensation strength determination unit 13 determines a motion compensation strength (S208). This processing is the same as the processing (S104 to S108) described with reference to FIG. 2, and thus a detailed description thereof is omitted.

Next, the compensation strength determination unit 13 further obtains the degree of scrolling or motion of a telop (S210). This degree of scrolling or motion of a telop includes: for example, the degree of entire scrolling indicating possibility that a moving picture scrolls on the entire screen; the degree of region scrolling indicating possibility that the moving picture is scrolling for each predetermined region; or the degree of motion of a telop indicating possibility that a telop is displayed on the moving picture in a moving manner for each predetermined region.

Here, with an increase in the possibility that the motion picture is scrolling on the entire screen, a value of the degree of entire scrolling increases, with an increase in the possibility that the moving picture is scrolling in a predetermined region, a value of the degree of region scrolling increases, and with an increase in the possibility that the telop is displayed in a moving manner on a predetermined region on the moving picture, a value of the degree of motion of a telop increases.

The compensation strength determination unit 13 may obtain the degree of scrolling or motion of a telop in any manner, but the compensation strength determination unit 13 obtains it from an external processing unit.

Then the compensation strength determination unit 13, by changing the motion compensation strength, which has been determined by using the histogram, in a manner such that with an increase in the obtained degree of scrolling or motion of a telop, the motion compensation strength approaches closer to a value of motion compensation strength logically determined based on frame rates before and after frame rate conversion, newly determines the motion compensation strength (S212).

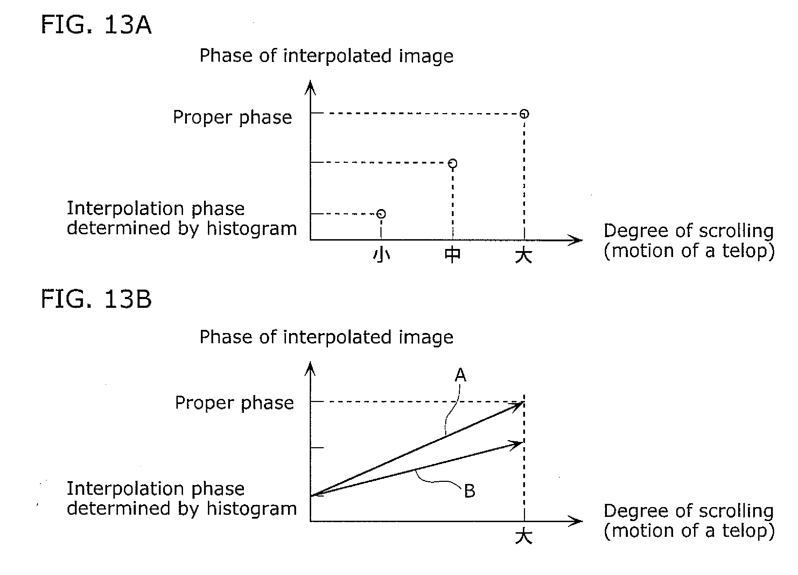

FIGS. 13A and 13B are diagrams illustrating processing of newly determining the motion compensation strength by the compensation strength determination unit 13 according to Embodiment 4.

As shown in FIG. 13A, if the degree of scrolling or motion of a telop is "Small", the compensation strength determination unit 13 determines as the motion compensation strength the interpolation phase determined by using the histogram. If the degree of scrolling or motion of a telop is "Great", the compensation strength determination unit 13 determines the proper phase as the motion compensation strength.

If the degree of scrolling or motion of a telop is "Intermediate" between "Great" and "Small", the compensation strength determination unit 13 determines as the motion compensation strength a phase in the middle between the interpolation phase determined by using the histogram and the proper phase.

The degree of scrolling or motion of a telop is not limited to the three levels including Great, Intermediate, and Small, but the motion compensation strength may be determined based on multiple levels including four or more levels.

FIG. 13B is a diagram illustrating processing of newly determining the motion compensation strength by the compensation strength determination unit 13 in a case where the degree of scrolling or motion of a telop is provided in multiple levels.

As shown in a graph A in this figure, the compensation strength determination unit 13 determines the motion compensation strength in a manner such that with an increase in the degree of scrolling or motion of a telop, the motion compensation strength approaches closer to the proper phase from the interpolation phase determined by using the histogram.

Moreover, as shown in a graph B in this figure, even if the degree of scrolling or motion of a telop is "Great", without determining the motion compensation strength as a value of the proper phase, the motion compensation strength may be determined as a value smaller than the value of the proper phase.

As described above, the compensation strength determination unit 13, for each predetermined region, by changing the determined motion compensation strength in a manner such that with an increase in the degree of region scrolling, the motion compensation strength approaches closer to the value of motion compensation strength logically determined based on the frame rates before and after the frame rate conversion, newly determines the motion compensation strength.

The compensation strength determination unit 13, for each predetermined region, by changing the determined motion compensation strength in a manner such that with an increase in the degree of motion of a telop, the motion compensation strength approaches closer to the value of motion compensation strength logically determined based on the frame rates before and after the frame rate conversion, newly determines the motion compensation strength.

If the moving picture is scrolling on the entire screen, all motion compensation strengths in the interpolated picture are changed so as to bring the entire interpolated picture closer to the original picture.

Specifically, the compensation strength determination unit 13, by changing all the determined motion compensation strengths, which have been determined by using the histogram, in a manner such that with an increase in the degree of entire scrolling, the motion compensation strength approaches closer to the value of motion compensation strength logically determined based on the frame rates before and after the frame rate conversion, newly determines the motion compensation strength.

Referring back to FIG. 12, the interpolated picture generation unit 14 next generates, for each predetermined region, an interpolated picture in accordance with the motion compensation strength determined by the compensation strength determination unit 13 (S214).

As a result of the above, the processing of generating the interpolated picture by the image processing device 10 according to Embodiment 4 ends.

In Embodiment 4, the compensation strength determination unit 13 obtains the degree of entire scrolling, the degree of region scrolling, or the degree of motion of a telop to determine the motion compensation strength. However, the compensation strength determination unit 13 may obtain two or all of the degree of entire scrolling, the degree of region scrolling, or the degree of motion of a telop and determine the motion compensation strength in accordance with the obtained degree information.

For example, when the compensation strength determination unit 13 has obtained the degree of region scrolling or the degree of motion of a telop, the compensation strength determination unit 13 may determine the motion compensation strength in accordance with the degree of region scrolling and further change the determined motion compensation strength in accordance with the degree of motion of a telop to newly determine the motion compensation strength.

When the compensation strength determination unit 13 has obtained the degree of entire scrolling, the degree of region scrolling, and the degree of motion of a telop, the compensation strength determination unit 13 may determine the motion compensation strength in accordance with the degree of entire scrolling, further change the motion compensation strength in accordance with the degree of region scrolling to newly determine the motion compensation strength, and further change the motion compensation strength in accordance with the degree of motion of a telop to newly determine the motion compensation strength.

As a result of this, the motion compensation strength is newly determined in a manner such that with an increase in possibility that the moving picture is scrolling on the entire screen, the picture approaches closer to the proper interpolated picture logically determined in the frame rate conversion processing. Moreover, the motion compensation strength is newly determined in a manner such that with an increase in possibility that the moving picture is scrolling in a predetermined region, the picture approaches closer to the proper interpolated picture in the predetermined region. Moreover, the motion compensation strength is newly determined in a manner such that with an increase in possibility that a telop is flowing on the moving picture in the predetermined region, the picture approaches closer to the proper interpolated picture in the predetermined region.

Specifically, in a region not in need of creation of an interpolated picture close to its original picture, a picture close to the proper interpolated picture is generated. Thus, the interpolated picture can be adaptively generated in accordance with characteristics of the moving picture, permitting both error reduction and smoothness in an interpolated picture after the frame rate conversion to be achieved with simple configuration.

As described above, the image processing device 10 according to Embodiments 1 to 4 provide special effect that the adaptive control of the interpolation phase in accordance with characteristics of a screen permits achieving both the error reduction and the smoothness. Picture data of an interpolated image in accordance with the characteristics of the screen can be generated, and display representation power can dramatically be improved.

The invention can be realized not only as such an image processing device 10 but also as an image processing method including characteristic steps included in the image processing device 10 or as a program having a computer execute such characteristic steps. It is needless to say that such a program can be distributed to the market through a recording medium such as a CD-ROM and a transfer medium such as the Internet.

Furthermore, the invention can also be realized as a semiconductor integrated circuit (LSI) realizing part or all of functions of such an image processing device 10, or as an image processing device, such as a digital TV, provided with such an image processing device 10. More specifically, it can be realized as an integrated circuit provided with all the components shown in FIGS. 1 or 12.

Providing integrated circuits may be achieved by providing them individually or in one chip including part or all of them.

Providing the integrated circuits is not limited to LSIs but may also be realized by a special circuit or a general-purpose processor. Also used may be an FPGA (Field Programmable Gate Array) capable of programming after manufacturing an LSI or a configurable processor capable of re-configuring connection and setting of a circuit cell inside an LSI.

Furthermore, with an introduction of a technology of providing an integrated circuit in place of an LSI achieved by advancement of semiconductor technologies and a different technology derived therefrom, it is needless to say that various processing units may be integrated by using this technology.

The image processing device 10 according to the invention has been described above based on Embodiments, but the invention is not limited to these embodiments. Without departing from the spirits of the invention, those obtained by adding various modifications to these embodiments thought by those skilled in the art and a mode obtained by combining together components in the different embodiments may also be included in the scope of the invention.

Specifically, it should be noted that Embodiments disclosed herein are just illustrative and not limiting in all points. The scope of the invention is meant to include not only the description given above but also all modifications made within the spirits and scope equivalent to the scope of the claims.

For example, in Embodiments described above, the moving picture is formed on an individual frame basis. However, the moving picture may be formed on an individual field basis.

In Embodiments described above, the motion vector quantity is a value indicating magnitude and a direction of a motion vector. However, the motion vector quantity may be a value indicating only the magnitude of motion vector, or a value indicating only the direction of motion vector. Also in this case, creating a histogram of motion vector quantities provide the same effect as that provided by Embodiments described above.

### [Industrial Applicability]

An image processing device according to the invention is useful as an image processing device with simple configuration that creates an interpolated picture and that is capable of achieving both error reduction and smoothness in an interpolated picture after frame rate conversion.

### [Reference Sings List]

- 10: Image processing device
- 11: Motion vector detection unit
- 12: Histogram creation unit
- 13: Compensation strength determination unit
- 14: Interpolated picture generation unit

## Claims

1. An image processing device generating an interpolated picture between temporally former and latter original pictures included in an inputted moving picture to convert a frame rate of the moving picture, said image processing device comprising:
a motion vector detection unit configured to detect a motion vector quantity between the two original pictures for each of a plurality of blocks obtained by dividing the original picture;
a compensation strength determination unit configured to determine, for each predetermined region composed of the blocks, a motion compensation strength indicating a degree of matching between the original picture and the interpolated picture based on the detected motion vector quantities; and
an interpolated picture generation unit configured to generate, for each predetermined region, the interpolated picture in accordance with the determined motion compensation strength.

2. The image processing device according to Claim 1, further comprising
a histogram creation unit configured to create, for each predetermined region, a histogram of the detected motion vector quantities,
wherein said compensation strength determination unit is configured to determine, for each predetermined region, the motion compensation strength by using the created histogram.

3. The image processing device according to Claim 2,
wherein said compensation strength determination unit is configured to determine, for each predetermined region, the motion compensation strength in a manner such that the degree of matching between the original picture and the interpolated picture increases with an increase in a width of the motion vector quantity distribution shown in the histogram.

4. The image processing device according to Claim 2,
wherein said compensation strength determination unit is configured to determine, for each predetermined region, the motion compensation strength in a manner such that the degree of matching between the original picture and the interpolated picture increases with an increase in a peak interval in the motion vector quantity distribution shown in the histogram.

5. The image processing device according to Claim 2,
wherein said compensation strength determination unit is configured to determine, for each predetermined region, the motion compensation strength in a manner such that the degree of matching between the original picture and the interpolated picture increases with an increase in a difference between maximum and minimum values of the motion vector quantities shown in the histogram.

6. The image processing device according to any one of Claims 2 to 5,
wherein, when the predetermined region is defined as a line region composed of the blocks successive in a line direction horizontal to the picture, said histogram creation unit is configured to create the histogram for each line region,
said compensation strength determination unit is configured to determine the motion compensation strength for each line region, and
said interpolated picture generation unit is configured to generate the interpolated picture for each line region.

7. The image processing device according to any one of Claims 2 to 5,
wherein, when the predetermined region is defined as a column region composed of the blocks successive in a column direction vertical to the picture, said histogram creation unit is configured to create the histogram for each column region,
said compensation strength determination unit is configured to determine the motion compensation strength for each column region, and
said interpolated picture generation unit is configured to generate the interpolated picture for each column region.

8. The image processing device according to any one of Claims 1 to 7,
wherein said compensation strength determination unit is configured to determine the motion compensation strength in a manner such that the motion compensation strengths between the adjacent predetermined regions change successively.

9. The image processing device according to any one of Claims 2 to 8,
wherein said compensation strength determination unit is configured to further obtain a degree of entire scrolling indicating possibility that the moving picture is scrolling on an entire screen, and
by changing all the motion compensation strengths in the interpolated picture, which strengths have been determined by using the histogram, in a manner such that with an increase in the degree of entire scrolling, each motion compensation strength approaches closer to a value of a motion compensation strength logically determined based on frame rates before and after frame rate conversion, newly determine the motion compensation strength.

10. The image processing device according to any one of Claims 1 to 9,
wherein said compensation strength determination unit is configured to further obtain, for each predetermined region, a degree of region scrolling indicating possibility that the moving picture is scrolling, and
for each predetermined region, by changing the determined motion compensation strength in a manner such that with an increase in the degree of region scrolling, the motion compensation strength approaches closer to the value of the motion compensation strength logically determined based on the frame rates before and after the frame rate conversion, newly determine the motion compensation strength.

11. The image processing device according to any one of Claims 1 to 10,
wherein said compensation strength determination unit is configured to further obtain a degree of motion of a telop indicating possibility that the telop is displayed in a moving manner on the moving picture, and
for each predetermined region, by changing the determined motion compensation strength in a manner such that with an increase in the degree of motion of a telop, the motion compensation strength approaches closer to the value of the motion compensation strength logically determined based on the frame rates before and after the frame rate conversion, newly determine the motion compensation strength.

12. The image processing device according to any one of Claims 1 to 11,
wherein said motion vector detection unit is configured to detect, for each block, a motion vector between the two original pictures, and
said interpolated picture generation unit is configured to perform, for each predetermined region, motion compensation processing on at least one of the two original pictures by using the motion vector detected by said motion vector detection unit and the degree of matching between the original picture and the interpolated picture indicated by the motion compensation strength determined by said compensation strength determination unit to generates the interpolated picture.

13. An image processing method of generating an interpolated picture between two temporally former and latter original pictures included in an inputted moving picture to convert a frame rate of the moving picture, said image processing method comprising:
detecting a motion vector quantity between the two original pictures for each of blocks obtained by dividing the original picture;
determining, for each predetermined region composed of the blocks, a motion compensation strength indicating a degree of matching between the original picture and the interpolated picture based on the detected motion vector quantities; and
generating, for each predetermined region, the interpolated picture in accordance with the determined motion compensation strength.

14. A program for generating an interpolated picture between two temporally former and latter original pictures included in an inputted moving picture to convert a frame rate of the moving picture, said program causing a computer to execute:
detecting a motion vector quantity between the two original pictures for each of blocks obtained by dividing the original picture;
determining, for each predetermined region composed of the blocks, a motion compensation strength indicating a degree of matching between the original picture and the interpolated picture based on the detected motion vector quantities; and
generating, for each predetermined region, the interpolated picture in accordance with the determined motion compensation strength.

15. An integrated circuit controlling an image processing device generating an interpolated picture between two temporally former and latter original pictures included in an inputted moving picture to convert a frame rate of the moving picture, said integrated circuit comprising:
a motion vector detection unit configured to detect a motion vector quantity between the two original pictures for each of blocks obtained by dividing the original picture;
a compensation strength determination unit configured to determine, for each predetermined region composed of the blocks, a motion compensation strength indicating a degree of matching between the original picture and the interpolated picture based on the detected motion vector quantities; and
an interpolated picture generation unit configured to generate, for each predetermined region, the interpolated picture in accordance with the determined motion compensation strength.
